# EUROPEAN PATENT APPLICATION

(11) **EP 1 058 217 A2**
(43) Date of publication of application: **06.12.2000**
(21) Application number: 00201819.0
(22) Date of filing: 25.05.2000
(51) Int. Cl.: G07F 19/00, G06F 17/60

(54) **Financial services systems and methods for transferring funds**

(30) Priority: 26.05.1999 US 136071 P
(71) Applicant: CITIBANK, N.A., New York, New York 10043 (US)
(72) Inventor: Prasad, Raghav, London NW3 3HR (GB)
(74) Representative: Hynell, Magnus

(57) **Abstract**

The present invention provides systems and methods for transferring funds utilizing existing financial services networks and credit, debit, ATM and/or "Smart" cards. The methods and systems of the present invention are advantageous for transferring funds across international borders.

## Description

This application claims benefit under 35 U.S.C. § 119(e) of U.S. Provisional Application No. 60/136,071, filed May 26, 1999 the contents of which are fully incorporated by reference herein.

### Field of the Invention:

The present invention relates to financial services systems and methods. In one aspect the present invention provides systems and methods for transferring funds utilizing existing financial services networks and credit, debit, ATM and/or "Smart" cards. The methods and systems of the present invention are advantageous for transferring funds across international borders.

### Background:

The annual global cross international border fund flow is currently in excess of 90 billion dollars. Wire transfers currently constitute approximately 10% of the funds transfer market. The majority of the remaining 90% of the market comprises Postal Money Orders, checks and individuals carrying money across international borders.

Among the individuals that utilize fund transfer services are included expatriates who transfer funds back to their country of origin, parents sending funds to children, for example, children in school, tourists and small businesses. These individuals are not well serviced by currently available fund transfer mechanisms.

A problem that exists in current financial services systems is that the transfer of funds across international borders generally requires a manual interface. An individual seeking to transfer funds to another individual across an international border generally needs to enter a Western Union Office, a money transfer service, or a financial institution, fill out a form, choose a password, provide cash to the transferring agency and pay hefty fees. On the receiving end, the individual receiving the fund must know the password, enter a receiving office, prove their identity, and possibly undertake other steps to obtain the funds. Generally the receiver must also take possession of the entire amount of funds transferred. It is a very cumbersome and time consuming process, and a very expensive process, today. In addition current fund transfers may take 1-3 days to complete.

A need exists for better systems and methods for transferring funds that will provide advantages to financial institutions and their customers.

### Summary of the Invention:

The present invention provides a financial services system and method that overcome the aforementioned disadvantages, and provides many advantages, for the transfer of funds.

According to an embodiment of the present invention, a transfer account is utilized to facilitate the transfer of funds utilizing existing financial services networks such as the ATM network. The transfer account is created at a first location and funded through a deposit of funds, a transfer of funds from an existing account, or other methods conventionally utilized to fund accounts. The transfer account may have the features of currently available accounts, including ATM, debit, and/or "Smart" card features, that may be utilized by the account holder, and indeed may simply be a normal account offered by a financial institution that has the following capabilities. The transfer account may be a separate account, or a designated portion of an existing account.

According to the present invention, the account holder may specify that one or more "sibling" ATM, debit and/or Smart cards be linked to the transfer account and be able to access a specified amount of funds in the transfer account. The account holder may provide the sibling card to individuals of the account holder's choosing to provide the selected individuals with access to the funds specified for the particular sibling card. A receiver of the sibling card may access the designated funds utilizing the same financial services networks capable of being utilized by the account holder, for example the existing ATM network. Thus, the present invention provides a system and method for transferring funds from the account holder to the recipient of the sibling card.

Currently, there is network of ATM's that is constructed to be able to read account information anywhere in the world and dispense money from that account at any other point in the world. An account opened in New York city may be accessed from Guatemala through an ATM that is linked to the same network as the account. Today this as a service is available to account holders who can utilize an ATM anywhere in the world to access their account. According to the present invention, this concept is expanded to make the ATM network, or similar networks, available to people who are not necessarily the account holder but who are the recipients of money that is going from point A to point B. The systems and methods of the present invention allow an individual to use the ATM network to transfer money to another individual.

The conceptual shift of the present invention is the attachment of an ATM, debit and/or "Smart" card to an account that allows specified access to the account but is not held by an owner of the account. What this means is that if an individual has an account in New York they may obtain and utilize an ATM, debit and/or Smart card for the account. However, the account holder may also designate another individual, for example in another country to receive a sibling card that would allow limited access to the account, without the individual being an owner of the account.

Thus the present invention provides new capabilities to the owner of an account. The owner of an account may hold a series of capabilities on the account including, but not limited to, balance inquiries, deposit and withdrawal, money transfer, etc. and the ability to provide limited access to other individuals to the account.

In general, the sibling card attached to an account will have a limited set of capabilities. For example, the holder of the sibling card may only have the capability to withdraw a specified amount of funds from the account. These funds may be withdrawn incrementally, or in a single transaction. In this type of embodiment, the holder of the sibling card cannot view balances, transfer money, or perform other functions that the account holder may perform over the ATM or financial services network. The sibling card holder may simply request funds, and to the extent funds are available, they may withdraw the funds.

The concepts of the present invention may be extended to provide other types of limited access to the account. For example, a sibling card could be issued that would allow the sibling card holder limited functionality to simply deposit money into an account. The account holder would then be provided with complete access to those funds. This embodiment provides another means for transferring funds between individuals.

The "transfer" account, or portion of an account, that is accessed by the sibling card may be designed to minimize the costs to a financial services institution for account management. In its simplest form, the transfer account may be a non-interest bearing holding account.

An additional feature of the present invention is that multiple sibling cards may be attached one or more transfer accounts. This feature would enable sibling card holders in different locations to access the account and withdraw money etc. This feature could be particularly advantageous for example if an account holder in New York had a son in school in London, a mother in Paris and an Uncle in Singapore. The account holder could obtain three sibling cards on their transfer account and provide them to these three people who could then access the account and take money the out whenever they needed it.

An additional feature of the present invention is a limit file attached to the transfer account. The limit file is maintained by the issuer of the account and includes the amount of funds in the transfer account that each sibling card holder could access, by day, week and/or in total. The limit file would accessed by the ATM network software, for example, before funds were dispensed to the sibling card holder.

For example, an account holder could designate that sibling card number one gets to withdraw $500 dollars a month, sibling card number two gets to withdraw $1,000 a year and sibling card number three gets to withdraw $20 a day. In a possible embodiment, the way this whole process would work is that when the sibling card holder put in their card at an ATM their request for funds would be checked against the limit list of the limit file and if their specified limit has not been exceeded, funds would be dispensed. If the sibling card holder's limit has been exceeded, additional funds would not be dispensed.

This type of functionality may be provided over current ATM networks with minor technical changes that are within the skill of those of ordinary skill in the art.

As described above, one possible advantageous use of the present invention is for the transfer of funds across international borders. This may occur where the sibling card holder is located in a different country from the account holder. In this situation, currency exchange may be necessary, for example an account in the US may include funds in dollars, wherein the sibling card holder in Mexico may wish to withdraw funds in pesos. The systems and methods of the present invention may utilize currently existing currency exchange capabilities, for example those accessible via current ATM networks, to accomplish the currency exchange. This currency exchange may include, for example, the provision of a settlement currency that both the account holders currency and the sibling card holders requested currency are converted into first to facilitate the conversion.

As will be realized by those of ordinary skill in the art, the methods and systems of the present invention may be offered by financial services institutions to consumers under various pricing schemes. For example, a financial services institution may charge a transaction fee for use of the sibling card. This transaction fee may be specific for sibling card uses and differ from the fee charged for ATM use by the account holder. Fees may also be charged for creating and/or maintaining a transfer account. In addition, the financial services institution may charge a currency exchange fee for converting currency. In general, flexible pricing schemes may be utilized to market the product in the manner best suited to the financial services institution's overall business plan.

As will be realized from the foregoing description, the systems and methods may be advantageously utilized to facilitate funds transfer, or other types of banking services, across geographic distances.

The systems and methods of the present invention are explained further detail in the following more detailed description and with reference to the appended figures.

### Brief Description of the Figures:

Figure 1 is a schematic representation of an embodiment of a system of the present invention depicting an overall relationship among an account holder, bank branch, fulfillment center and sibling card recipients.
Figure 2 is a schematic breakout of a portion of Figure 1 illustrating the funding of a transfer account.
Figure 3 is a schematic breakout of an embodiment of the present invention illustrating the use of sibling cards.
Figure 4 is a schematic breakout of an embodiment of the present invention illustrating transaction flow details.

### Detailed Description of the Invention:

The present invention provides new financial services methods and systems, including methods and systems for transferring funds.

In an aspect, the present invention provides a system for transferring funds from a primary account to a recipient that is not an account holder on the primary account utilizing a network, the system comprising:
a primary account;
a transfer account linked to the primary account and comprising a specified amount of transfer funds available from the primary account;
a sibling card associated with the transfer account;
a database comprising information relating to the primary account, the transfer account and the sibling card;
a network that may be accessed by the sibling card to allow the sibling card to interface with information relating to the transfer account in the database and enable access to the funds in the transfer account.

The primary account will generally comprise an account at a financial services institution. Examples of primary accounts include, but are not limited to, checking accounts, savings accounts, money-market accounts, brokerage accounts, credit accounts (including credit lines and credit cards), home equity line accounts and the like traditionally offered by financial services institutions such as banks, stock brokers, insurance agencies and the like. The primary account may be a physical account, such as one established in a traditional bank or brokerage house, or may be a virtual account existing in a network such as the world wide web.

The attributes of the primary account will be those traditionally associated with the accounts referred to above. These attributes include, but are not limited to: account number(s); name, address and contact information of the account holder(s); funds information; routing information (eg ABA routing information); credit information and similar types of information traditionally maintained by financial services institutions about their accounts. A description of the general types of information maintained about financial services industry accounts may be found in the commonly assigned US patent application serial number 09/190,727, filed December 12, 1998, entitled "Distributed Network Based Electronic Wallet" the disclosure of which is hereby incorporated herein by reference.

The transfer account may be established as an account linked to the primary account for the purpose of facilitating funds transfer according to the present invention. At the time of opening, the transfer account will be funded through transfer of a portion of funds from the primary account. In general, the amount of funds transferred may be up to 100% of the amount of funds in the primary account, although in practice some fixed amount less than 100% will generally be transferred. The transfer account may be given a unique account number, or unique prefix or suffix off of the primary account number for identification purposes. The attributes of the transfer account will also include a link or other access to attributes of the primary account relating to account and customer identification.

The primary account may be advantageously established, with an attendant transfer account, utilizing the methods described in commonly assigned US Patent No. 5,866,889, Issued February 2, 1999, "Integrated Full Service Consumer Banking System and System and Method for Opening an Account" the disclosure of which is hereby incorporated by reference.

As will be understood by those of ordinary skill in the art, multiple transfer accounts may be linked to a single primary account, or a single transfer account may be linked to multiple primary accounts for sources of funds.

The initial funds transfer from the primary account to the transfer account may occur through a human interaction between the account holder and the financial services institution staff, or through an electronic interaction between the account holder and the financial services institution, for example through an on-line or web based network connection. In embodiments of the present invention, it may be advantageous to allow automated funds transfer initiated by the primary account holder without direct human interaction with financial services institution staff to replenish the transfer account after initial formation.

The transfer account may include some or all of the attributes of the primary account or a conventional financial services industry account. For example, in embodiments of the present invention, the transfer account may be an interest bearing account. In other embodiments of the present invention, designed to minimize impact on the financial services institution's resources the transfer account is a non-interest bearing, non statement generating account.

Information relating to the transfer account may be linked, and access to the transfer account by the primary account holder may be accomplished, through an existing ATM, debit, credit, "smart", or similar types of card accounts maintained by the primary account holder at the financial services institution. For example, in an embodiment of the present invention, the primary account holder may view information about the transfer account and replenish the transfer account through the use of an ATM card. In this embodiment, branch interaction and branch resources are minimized with respect to replenishment of the transfer account.

In embodiments of the present invention, the transfer account may be customized in multiple ways to allow the primary account holder, or the financial services institution maintaining the accounts, to control access to the funds in the transfer account. For example, the transfer account may include withdrawal limits established by the primary account holder or financial services institution, to limit the amount of funds that may be withdrawn within a specified time period, e.g. a daily withdrawal limit. The transfer account may further include access limits, to limit the number of times the account may be accessed over a defined time period. Similar features known to those of ordinary skill in the art may also be utilized with respect to the transfer account.

The transfer account may be established comprising funds in the same currency as the primary account, or in a different currency corresponding to the probable place that the transfer account will be accessed. In an embodiment of the present invention, the transfer account is established with funds in the same currency as the primary account, for example US dollars. If the transfer account is accessed in a country that utilizes a different currency, a currency exchange may be provided by the financial services institution maintaining the transfer account at the time of withdrawal of funds. This currency exchange is explained in more detail below. In general, the financial services institution's network will access current exchange rate information and calculate the correct amount of funds to be dispensed in the receiving currency.

Information relating to the transfer account, or transfer accounts, may be provided to the primary account holder together with information about their primary account. For example, information relating to the transfer account, may be provided as part of a consolidated banking statement to the primary account holder.

In the description of the present invention, and embodiments of the present invention set forth herein, the terminology "sibling card" is utilized to describe the device or vehicle utilized by a recipient of funds from the transfer account to access the transfer account. In an embodiment of the present invention, the sibling card comprises a card including account information similar to a conventional ATM or debit card. The sibling card may also be all or part of the information stored on a "smart" card. It is also possible for the sibling card to be a "virtual" card, existing as stored data in a data network or on a computer.

Embodiments of bank cards suitable for use as sibling cards are generally described in the art. For example, commonly assigned European Patent Publication EP980053A2 "Advanced Plastic Card for Financial and Informational Transactions" describes a type of card suitable for use as a sibling card.

In embodiments of the present invention it may be advantageous for the sibling card to be relatively simple and only contain sufficient functionality to allow a recipient to receive funds. These types of sibling cards may be preferred for use due to their relative simplicity and low cost.

The sibling card includes sufficient information to allow the user to access the transfer account and withdraw funds. As will be understood by those of ordinary skill in the art, technology similar to that utilized in ATM or debit cards may be utilized to accomplish these tasks. Generally the sibling card will include a magnetic, optical, or combination strip that includes account information and password information in a form that can be read by an automated teller machine. The account information will include information relating to the transfer account sufficient to allow the sibling card holder to access the transfer account. In situations where the sibling card is a "smart" card, further information, such as transaction records and details may be stored on the sibling card.

The sibling card may be initially programmed at a financial services institution by the institution's personnel at the time of creating the transfer account. Conventional ATM/debit card programming apparatus may be utilized.

A unique personal identification number ("PIN") is assigned to the sibling card at the time of creation. In an embodiment of the present invention, the PIN is chosen by the primary account holder. PIN information is then transmitted to the sibling card recipient utilizing a secure method, preferably independent of the sibling card.

In an embodiment of the present invention, the PIN information remains attached to the sibling card and transfer account for as long as the transfer account is open. Thus, the transfer account may be accessed multiple times utilizing the same PIN number with the same sibling card.

A database suitable for use in the system of the present invention will comprise information relating to the primary account, transfer account and sibling card. Suitable databases include database systems conventionally utilized by financial services institutions to manage accounts. The primary account information may include a separate file including details of all sibling cards and transfer accounts linked to the primary account. Information may be uploaded to the database from branches of the financial services institution, through ATM's, and/or on-line through a network interface.

The database will retain and store information including, but not limited to the following: primary account attributes and details, including those set forth above; transfer account details, including the amount of funds in the transfer account, the debiting of the transfer account, crediting of the transfer account, withdrawal limits etc. and sibling card details, including information about sibling card recipients, PIN numbers and the like. Creation and use of the primary account, creation and use of the transfer account and creation and use of the sibling card will generate transaction data that may be stored on the database for further access.

The database will also contain files that may be accessed through the financial services network that will assist a sibling card holder in requesting funds. These files are conceptually similar to the files accessed by ATM machines to allow an ATM user to perform transactions. The sibling card files will contain an additional instruction set relevant to use of the sibling card. A call to this instruction set may be encoded as part of the information contained on the sibling card such that use of the sibling card will generate the appropriate instruction display on an ATM or other terminal being utilized.

In an embodiment of a system of the present invention, an interface system, such as the one described in commonly assigned US patent application serial number 29/118,466, filed February 8, 2000, entitled "Banking Interface" may be utilized as an interface between an ATM, a sibling card and the financial services institution's database and network.

In a system of the present invention, the database forms parts of a financial services network that may be accessed by the sibling card holder through the sibling card to access funds in the transfer account. In embodiments of the present invention the sibling card holder (funds recipient) may access the transfer account through a branch of the financial services institution, through an ATM machine on an ATM network and/or, in the case of a "virtual" sibling card through electronic means such as the world wide web or on-line banking systems. An advantage of an embodiment of the present invention is that the sibling card may be utilized at conventional ATM machines that are generally available even in third world countries.

Use of the sibling card will generate a transaction request for funds from the transfer account. In the case of a physical sibling card and an ATM, the sibling card holder may insert the card in the ATM The PIN number may be utilized to validate the request in a manner similar to the current use of PIN numbers at ATM machines. The transaction request may be checked against the information contained in the database to determine whether the sibling card is valid and whether the transaction may be performed as requested. If either condition, or other conditions that may be imposed by the financial services institution are not met, the transaction will be rejected.

The transaction request is routed to the financial services institution that retains the primary account and created the transfer account, or the portion of the database that includes this information. The PIN is verified and the available balance in the transfer account checked. If the PIN is not valid, or there is insufficient balance, the transaction is denied. If the PIN is verified as valid, and there is sufficient balance to meet the request, funds are released from the transfer account and the transfer account debited. In the situation where the sibling card is utilized at an ATM machine, the funds may be dispensed by the ATM machine to the sibling card holder. In other situations, the funds are made available to the sibling card holder in other ways, for example by a bank teller giving the funds to the sibling card holder, or in the case of a virtual sibling card, through crediting the sibling card holder.

The financial services institution may apply and collect transaction fees based on use of the sibling card. These transaction fees may be charged to the primary account, the transfer account, the sibling card recipient (subtracted from the delivered funds) or some combination of all three. Fee information and collection routines are also stored and accessed on the database, for example in a manner similar to fee collection through the use of an ATM network.

As described above, systems and methods of the present invention may be advantageously utilized to transfer funds across international borders. In these situations it may be necessary to dispense funds in a currency other than the currency utilized by the primary account and/or transfer account. Accordingly, in an embodiment of a system of the present invention the database includes, or includes access to, currency exchange information and a currency exchange processor. The currency exchange processor calculates the amount of funds to be dispensed to the sibling card holder based on exchange rate data, preferably real time exchange rate data. In an embodiment of the present invention, transfers in and out of the transfer account are made in the currency utilized to establish the account, generally the local currency at the place the transfer and primary accounts are established. Thus, in a situation where a request for funds in a different currency is made, the currency exchange processor will convert the request into the transfer account currency, debit the transfer account accordingly, and then dispense funds in the requested currency minus any transaction fees. In addition to regular transaction fees, the financial services institution may charge an additional transaction fee to cover the costs of currency exchange.

As will be understood by those of ordinary skill in the art from the foregoing description, a system of the present invention may be utilized to transfer funds from an account holder to a recipient of the account holder's choosing. For example, an account holder in the US could create a transfer account and sibling card for a relative in a foreign country to transfer money to the relative. Further details on a potential use of the sibling card are set forth in the Example below.

In currently systems that do not rely on the present invention, a fund transfer transaction takes a significant amount of time from both the consumer's and the financial institution's perspective. In addition, the transaction ties up tellers and crowds the lobbies of financial institution branches. In general, a financial institution branch has to hold funds until the recipient arrives to pick the funds up. There is usually a process of checking and verifying the recipient's identification which increases the amount of teller time needed for the transaction. There may be further impact on the branch's resources if the sender or recipient are not bank customers and therefore diverting attention from the financial institution's customers.

Further, in systems prior to the present invention, fund transfer may have been sent batched together in lots with information regarding the recipients sent along to assist the receiving branch. This information may be garbled and/or incomplete causing discrepancies in the transfer process.

A feature of the present invention is that the methods and systems of the present invention allow for funds transfer without direct involvement by a financial institution's branch personnel. In an embodiment of the present invention, after the transfer account is established, it may be updated by the account holder through electronic funds transfers using an ATM network, on-line banking network or the like. Similarly, after the sibling card has been issued, the recipient of the sibling card may use the sibling card at any ATM in the financial institution's network to receive funds.

Embodiments of the present invention may be implemented utilizing on existing or pending financial services network infrastructure including databases, networks, ATM and the like. For example, an embodiment of the present invention may be implemented as part of a global financial services system, such as the one described in commonly assigned European Patent Publication EP 979459A1, "Global Financial Services Integration System and Process", the disclosure of which is hereby incorporated herein by reference.

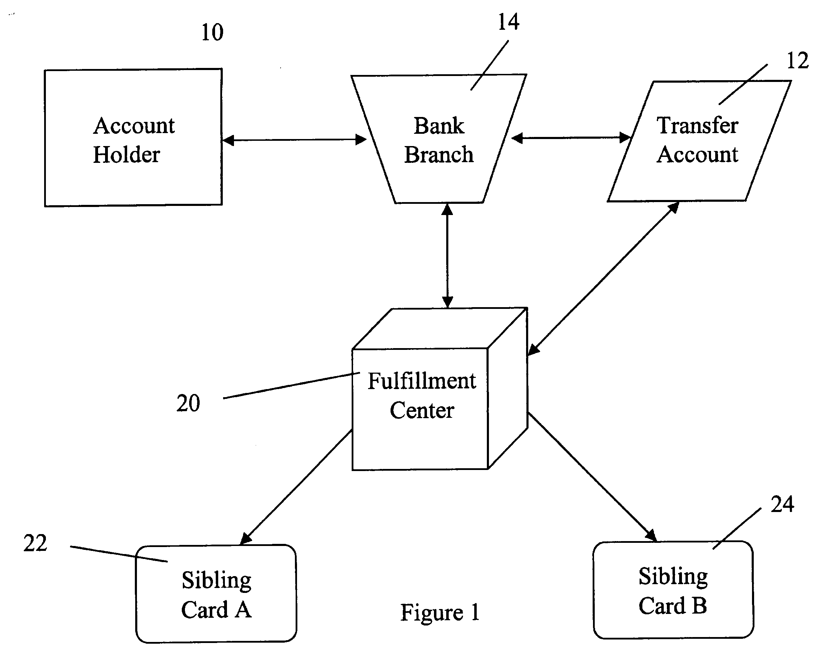

Figure 1 provides a schematic representation of a possible embodiment of a system of the present invention. As shown in Figure 1, an individual 10, may open a "transfer" account, 12 in a bank branch, 14. A fulfillment center, 20 is notified of the account opening and is authorized to send sibling cards A and B, on account 12, to receivers 22 and 24. The fulfillment center comprises a facility that provides card services to the banking institution that operates the bank branch. As will be understood by those of ordinary skill in the art, although many major financial institutions have fulfillment centers, or their equivalents, the function of the fulfillment center may be performed in other areas of the financial institution or by the bank branch.

Similarly, in embodiments of the present invention the functions of the bank branch may be automated or performed on-line through the use of an on-line and/or web based banking system. Thus the bank branch may comprise a virtual branch.

At this point, or at a later point in time, the individual who opens the account may set limits on the availability of funds from each sibling card. These limits become part of the financial services software associated with the network that will be utilized by the receivers to access the funds.

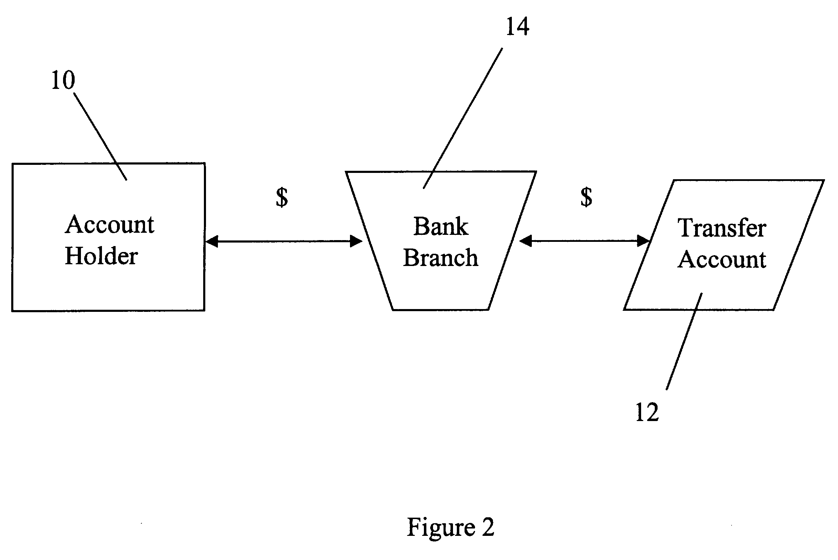

As shown in Figure 2, individual 10 may deposit money into account 12 at bank branch 14, or via other conventional means for depositing funds into an account. These funds are designated for account 12.

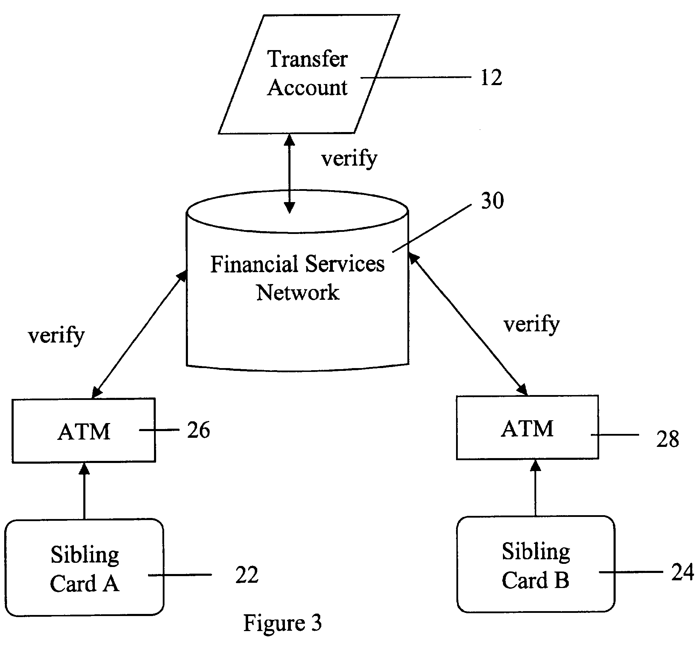

As shown in Figure 3, a sibling card holder, 22 or 24, may utilize the sibling card A or B to access an ATM, 26 or 28. The ATM will utilize existing financial services networks, 30, such as the Cirrus network, to verify that the sibling card is valid and to verify the funds limit placed on the card. If a currency exchange is necessary, the existing currency exchange features on the financial services network may be utilized.

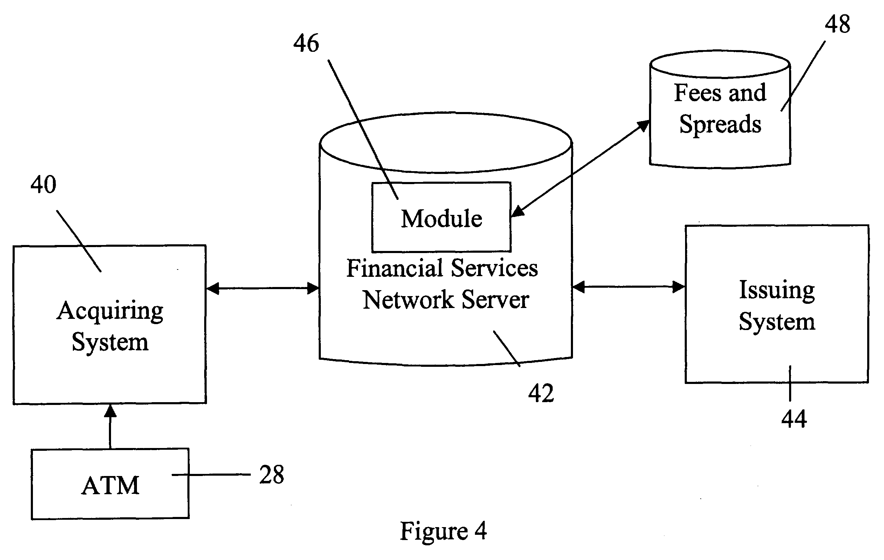

Figure 4 depicts a possible embodiment of a financial services network for handling a sibling card transaction. As shown in Figure 4, a sibling card transaction may flow from an ATM or similar terminal in an acquiring system, 40, into a network server 42 of a financial services network. The network server may be connected to the issuing systems' server 44 for verifying the funds limit on the sibling card and the authenticity of the card. In addition, the network server may include a currency exchange module 46, and be linked to a fees module 48 for currency exchange and fee calculation respectively. The currency exchange module 46 and the fees module 48 may be updated separately, and separately from the network to provide for changes in exchange rates and fee structure.

As shown in Figure 4, a customer's transaction would be captured by the external network when the sibling card holder went to an ATM this would be routed through the network connections tat exist already into a financial services network server that would then, using its existing foreign conversion engine as well as its existing settlement mechanisms that exist between countries to figure out how to settle the transaction at the end of the day. For example, if a London branch dispensed two hundred pounds at the end of each day they need to be made whole and that is what the settlement engine does, which is that it credits and debits the issuing system and credits the acquiring system with the amount that is being withdrawn and the credits and debits are all in the settlement currency that is used by the financial services network, for example US dollars.

On the customer side what happens is that the customer is debited the total amount which is the amount requested by the sibling card holder plus any fees and foreign exchange credits that are levied. The issuing institution will take from the customer the whole amount and will settle the dispensed amount with the acquiring institution on the other end of the network and will hold back the revenue that accrue out of this and will credit a revenue account inside the issuing institution.

As will be appreciated from the foregoing description there many possible embodiments of systems of the present invention.

In addition, the present invention provides methods for transferring funds.

An aspect of the present invention is a method for transferring funds, utilizing a financial services network and a sibling card, the funds being transferred from an account holder's primary account to a desired recipient other than the account holder the method comprising:
identifying an amount of funds to be transferred from the primary account;
creating a transfer account;
crediting the transfer account balance and debiting the primary account balance in the amount of the funds to be transferred;
creating a sibling card associated with the transfer account and able to access the transfer account;
creating a unique personal identification number (PIN) associated with the sibling card;
providing the desired recipient of the funds with the sibling card and the PIN;
dispensing at least a portion of the funds in the transfer account to the recipient in response to a request for the funds through the use of the sibling card on the financial services network.

Details relating to these method steps, including alternative embodiments, are set forth above in the discussion of a system of the present invention.

Further details relating to the present invention are set forth in the following example.

### Example:

This example illustrates the use of a system and a method of the present invention to transfer funds. In this example, the Sender is an existing customer of a bank and located in the United States. The Recipient is located in another geographic region. The Sender wishes to send Recipient $1000 US dollars.

At the branch office where the Sender banks, a Transfer Account is opened. The Transfer Account will be part of the Sender's relationship with the bank. This is the only manned interaction needed for the Sender and may be a one-time activity. After this, all fund transfers are automated and don't need interaction with the branch.. For existing customers this would be short, incremental account opening exercise that would require minimal amount of time. Their existing ATM access card could provide access to the Transfer Account as well.

The Transfer Account is Non Interest bearing / No checking / No statements; hence it has no maintenance costs & will generate float earnings. Balances and transactions on this account would appear as a part of the Sender's consolidated statement.

Account ownership of the Transfer Account rests with the Sender the Sibling Card merely has access to the funds to be able to initiate a funds transfer.

At account opening, the Sender indicates to the bank whether there would be one or more transferees on this account. Based on that input, the bank would issue one or more Sibling Cards. The Sibling Cards have limited functionality i.e. only withdrawal capability from this account. For purposes of the present example there is only a single Recipient, therefore only one Sibling Card is issued.

Details relating to the Sibling Card are stored on a central, global file at a database on the bank's network. Against the Sibling cards, the bank would store a limit that would restrict the amount of funds that can be withdrawn from the Transfer Account, in this example $1000.00. The bank could also store a time frame for which this limit is valid i.e. the bank could restrict the withdrawal amount on Sibling card to $100 per month. (Total transfers would be within the local daily withdrawal limit through ATMs set by each country).

This information could be amended i.e. to include / exclude Sibling cards and to change the amount and time limits associated with each Sibling cards. Hence Recipients can be added, removed or their amount & time limits changed from time to time.

At the time of issuance, a unique PIN is established for the Sibling Card.

The Sibling Card is sent by courier to the Recipient at the address indicated by the Sender at the time of account opening. The Sibling card pack will necessarily have to be multi-lingual and carry simple instructions on how to operate an ATM, as the target audience may not be English speaking & Tech friendly. The PIN number is forwarded separately.

To send funds, the Sender makes a deposit into the Transfer Account, by cash / cheque / account to account transfer. This could be done via an ATM, phone, via the world wide web or at the Teller counter in the branch i.e. exactly as if Sender was operating any other account with the bank.

To receive funds, all that the Recipient has to do is to go to any ATM on the bank's network, insert the Sibling card provide the proper PIN and make a withdrawal.

Every time the Sibling card is inserted at any ATM globally, the transaction information will be passed to the bank's network, as it happens today on an ICC withdrawal. At this point, it would be checked against the file to verify that - a. This is a valid Sibling card. and b. There is sufficient withdrawal limit left

At this point, in case either of the two conditions are not met, the transaction will be rejected.

If both conditions are met, the transaction will be routed to the issuing country (like a normal ATM transaction). The issuing country will verify the PIN & available balance in the transfer account. In case the PIN is not valid or there is insufficient balance, the transaction is denied and sent back.

If the PIN is verified and there is sufficient balance, funds would be delivered through the ATM by debiting the account. The file will be updated to track for this withdrawal.

At the time of withdrawal, charges and currency conversion spreads (if applicable) would be applied.

## Claims

1. A system for transferring funds from a primary account to a recipient that is not an account holder on the primary account utilizing a network, the system comprising:
a primary account;
a transfer account linked to the primary account and comprising a specified amount of transfer funds available from the primary account;
a sibling card associated with the transfer account;
a database comprising information relating to the primary account, the transfer account and the sibling card;
a network that may be accessed by the sibling card to allow the sibling card to interface with information relating to the transfer account in the database and enable access to the funds in the transfer account.

2. The system of claim 1 wherein the network is an ATM network.

3. The system of claim 1 wherein the system further comprises an automated teller machine for transferring the funds.

4. A method for transferring funds, utilizing a financial services network and a sibling card, the funds being transferred from an account holder's primary account to a desired recipient other than the account holder the method comprising:
identifying an amount of funds to be transferred from the primary account;
creating a transfer account;
crediting the transfer account balance and debiting the primary account balance in the amount of the funds to be transferred;
creating a sibling card associated with the transfer account and able to access the transfer account;
creating a unique personal identification number (PIN) associated with the sibling card;
providing the desired recipient of the funds with the sibling card and the PIN;
dispensing at least a portion of the funds in the transfer account to the recipient in response to a request for the funds through the use of the sibling card on the financial services network.
